# EUROPEAN PATENT APPLICATION

(11) **EP 4 296 224 A1**
(43) Date of publication of application: **27.12.2023**
(21) Application number: 22763216.3
(22) Date of filing: 28.02.2022
(51) Int. Cl.: C01B 21/086, H01G 11/62, H01M 10/0568

(54) **ELECTROLYTE COMPACT PRODUCTION METHOD AND ELECTROLYTE COMPACT**

(30) Priority: 01.03.2021 JP 2021031327
(71) Applicant: Nippon Shokubai Co., Ltd., Osaka-shi, Osaka 541-0043 (JP)
(72) Inventor: MORITA Tomohiro, Suita-shi, Osaka 564-0034 (JP); OKUMURA Yasunori, Suita-shi, Osaka 564-0034 (JP); SAKAMOTO Katsuhiko, Suita-shi, Osaka 564-0034 (JP)
(74) Representative: Germain Maureau
(86) International application number: PCT/JP2022/008402
(87) International publication number: WO 2022/186160

(57) **Abstract**

A method for producing a compact of an electrolyte containing a sulfonyl imide compound represented by the general formula (1) includes compressing of performing compression-granulating of the electrolyte in a powder form to obtain a sheet-shaped or strip-shaped electrolyte, and pulverizing the sheet-shaped or strip-shaped electrolyte to obtain a granular electrolyte compact, or tableting the electrolyte in a powder form to obtain a tablet-shaped electrolyte compact. LiN(R¹SO₂)(R²SO₂) (wherein R¹ and R² are identical or different from each other and each represent a fluorine atom, an alkyl group with 1 to 6 carbon atoms, or a fluoroalkyl group with 1 to 6 carbon atoms) (1).

## Description

### TECHNICAL FIELD

The present disclosure relates to an electrolyte compact production method and the electrolyte compact.

### BACKGROUND ART

A sulfonyl imide compound such as lithium bis(fluorosulfonyl)imide, which is used for an electrolyte of a lithium ion secondary battery, or the like, is crystallized and dried to obtain a powder, and the obtained power is generally packaged as it is and then shipped. There is a problem that the powder of the sulfonyl imide compound is blocked during storage or transportation and it takes time to extract the powder from a container in a subsequent step of preparing an electrolyte solution.

For example, Patent Document 1 proposes a method for granulating a lithium battery electrolyte including: a step 1 of putting an electrolyte into an extrusion granulator from a hopper and extruding a particulate substance; a step 2 of subjecting the particulate substance to vibration screening using a filter screen to screen for an electrolyte having a particle diameter larger than the diameter of the screen opening; and a step 3 of transferring the electrolyte which as been screened for, through a conveyor belt into a stirring drum, stirring and mixing the electrolyte, extrusion-granulating the particles, followed by packaging and storing. In this granulating method, a granulation pore diameter of the extrusion granulator of from 0.5 mm to 5 mm inclusive is adopted.

### CITATION LIST

### PATENT DOCUMENT

PATENT DOCUMENT 1: Japanese Unexamined Patent Publication No. 2020-184527

### SUMMARY OF THE INVENTION

### TECHNICAL PROBLEM

However, in the method in Patent Document 1, an electrolyte is put into the extrusion granulator, a particulate substance is then extruded, the electrolyte which has been screened for is stirred and mixed again, and the particles are extrusion-granulated. Therefore, excessive heat is applied to the electrolyte, and the electrolyte may be denatured. Since the granulated electrolyte has a relatively small particle diameter, it is likely to be scattered and difficult to handle.

In view of such points, the present disclosure has been made to provide a method for producing a compact of an electrolyte containing a sulfonyl imide compound, wherein the compact is unlikely to affect the electrolyte, is easily handled, and can be easily extracted from a container, and such an electrolyte compact.

### SOLUTION TO THE PROBLEM

As a result of studies, the inventors of the present application have found that when an electrolyte containing a sulfonyl imide compound is molded through a specific process, the specific surface area is decreased, production of an aggregate during storage is suppressed, and an electrolyte compact can be easily extracted from a container.

The present disclosure is specifically as follows. An electrolyte compact production method of the present disclosure is a method for producing a compact of an electrolyte containing a sulfonyl imide compound represented by the general formula (1): LiN(R¹SO₂)(R²SO₂) (wherein R¹ and R² are identical or different from each other and each represents a fluorine atom, an alkyl group with 1 to 6 carbon atoms, or a fluoroalkyl group with 1 to 6 carbon atoms) including: compressing of performing compression-granulating of the electrolyte in a powder form to obtain a sheet-shaped or strip-shaped electrolyte; and pulverizing the sheet-shaped or strip-shaped electrolyte to obtain a granular electrolyte compact. In the compressing, the electrolyte in a powder form may be compression-granulated by passing the electrolyte in a powder form between press rollers in pair, to obtain the sheet-shaped or strip-shaped electrolyte having a length in a longitudinal direction of from 10 mm to 100 mm inclusive. In the compressing, a roller compactor may be used. In the pulverizing, a roll granulator may be used. The granular electrolyte compact may have a particle diameter of from 1 mm to 10 mm inclusive. The electrolyte compact may contain the electrolyte in a powder form.

The electrolyte compact production method of the present disclosure is a method for producing a compact of an electrolyte containing a sulfonyl imide compound represented by the general formula (1), including tableting the electrolyte in a powder form into a tablet to obtain a tablet-shaped electrolyte compact. The method may further include drying the tablet-shaped electrolyte compact. The method may further include wetting the electrolyte in a powder form or the tablet-shaped electrolyte compact. In the tableting, a rotary tablet press may be used. The tablet-shaped electrolyte compact may have a particle diameter of from 5 mm to 25 mm inclusive. The electrolyte compact may contain the electrolyte in a powder form.

The sulfonyl imide compound represented by the general formula (1) may include at least one of LiN(FSO₂)₂ or LiN(CF₃SO₂)₂.

The electrolyte may further contain at least one selected from the group consisting of a compound represented by the general formula (2): LiPFₐ(CₘF₂ₘ₊₁)₆₋ₐ (2) (where 0 ≤ a ≤ 6 and 1 ≤ m ≤4), a compound represented by the general formula (3): LiBF_{b}(CₙF₂ₙ₊₁)_{4-b} (3) (where 0 ≤ b ≤ 4 and 1 ≤ n ≤ 4), and LiAsF₆.

An electrolyte compact of the present disclosure is a compact of an electrolyte containing a sulfonyl imide compound represented by the general formula (1), the compact contains the electrolyte in a powder form having an average particle diameter of 1,300 µm or less in an amount of 10 parts by mass or less relative to 100 parts by mass of the compact, and the compact has a hardness of from 10 N to 50 N inclusive. The compact may have a particle diameter of from 5 mm to 25 mm inclusive.

### ADVANTAGES OF THE INVENTION

The present disclosure can provide a method for producing a compact of an electrolyte containing a sulfonyl imide compound, in which the compact is unlikely to affect the electrolyte, is easy to handle, and can be easily extracted from a container, and such an electrolyte compact.

### DESCRIPTION OF EMBODIMENTS

Hereinafter, embodiments of the present disclosure will be described in detail. The following description of preferred embodiments is merely an example in nature, and is not intended to limit the scope, applications, or use of the present disclosure.

### (Electrolyte)

An electrolyte compact obtained by the production method according to an embodiment contains, as an electrolyte, a sulfonyl imide compound (hereinafter referred to as a "sulfonyl imide compound (1)", a fluorine-containing sulfonyl imide salt) represented by the general formula (1): [Chemical 1]

LiN(R¹SO₂)(R²SO₂) (1).

In the general formula (1), R¹ and R² are identical or different from each other and each (independently) represent a fluorine atom, an alkyl group with 1 to 6 carbon atoms, or a fluoroalkyl group with 1 to 6 carbon atoms.

Examples of the alkyl group with 1 to 6 carbon atoms include a methyl group, an ethyl group, a propyl group, an isopropyl group, a butyl group, a pentyl group, and a hexyl group. Among alkyl groups with 1 to 6 carbon atoms, a linear or branched alkyl group with 1 to 6 carbon atoms is preferable, and a linear alkyl group with 1 to 6 carbon atoms is more preferable.

Examples of the fluoroalkyl group having 1 to 6 carbon atoms include one obtained by substituting some or all of the hydrogen atoms contained in an alkyl group with 1 to 6 carbon atoms by a fluorine atom. Examples of the fluoroalkyl group with 1 to 6 carbon atoms include a fluoromethyl group, a difluoromethyl group, a trifluoromethyl group, a fluoroethyl group, a difluoroethyl group, a trifluoroethyl group, and a pentafluoroethyl group. The fluoroalkyl group may particularly be a perfluoroalkyl group.

The substituents R¹ and R² are each preferably a fluorine atom or a perfluoroalkyl group (e.g., a perfluoroalkyl group with 1 to 6 carbon atoms, such as a trifluoromethyl group, a pentafluoroethyl group, or a heptafluoropropyl group), more preferably a fluorine atom, a trifluoromethyl group, or a pentafluoroethyl group, yet more preferably a fluorine atom or a trifluoromethyl group, still more preferably a fluorine atom. The substituents R¹ and R² may be identical to or different from each other.

Examples of the sulfonyl imide compound (1) include lithium bis(fluorosulfonyl)imide (LiN(FSO₂)₂, may be hereinafter referred to as "LiFSI"), lithium bis(trifluoromethylsulfonyl)imide (LiN(CF₃SO₂)₂, may be hereinafter referred to as "LiTFSI"), lithium (fluorosulfonyl)(methylsulfonyl)imide, lithium (fluorosulfonyl)(ethylsulfonyl)imide, lithium (fluorosulfonyl)(trifluoromethylsulfonyl)imide, lithium(fluorosulfonyl)(pentafluoroethylsulfonyl)imide, lithium (fluorosulfonyl)(heptafluoropropylsulfonyl)imide, lithium bis(pentafluoroethylsulfonyl)imide, and lithium bis(heptafluoropropylsulfonyl)imide. As the sulfonyl imide compound (1), these compounds may be used alone or in combination of two or more thereof.

Among the sulfonyl imide compounds (1), LiN(FSO₂)₂ and LiN(CF₃SO₂)₂ are preferable, and LiN(FSOz)z is more preferable, in view of improving battery performance. In other words, the sulfonyl imide compound (1) in the electrolyte compact preferably contains at least one of LiN(FSO₂)₂ or LiN(CF₃SO₂)₂, more preferably LiN(FSO₂)₂.

Alternatively, as the sulfonyl imide compound (1), a commercially available product may be used, or one obtained by synthesis using any known method may also be used. A method for synthesizing the sulfonyl imide compound (1) is not particularly limited, and all known methods can be adopted. Examples of the method include methods described in International publication WO 2011/149095, Japanese Unexamined Patent Publication Nos. 2014-201453, 2010-168249, 2010-168308, and 2010-189372, International publication WO 2011/065502, Japanese Patent Application Publication No. 8-511274, International publications WO 2012/108284, WO 2012/117961, and WO 2012/118063, Japanese Unexamined Patent Publication Nos. 2010-280586, 2010-254543, and 2007-182410, and International publication WO 2010/010613. By the known method, a powder (solid) of the sulfonyl imide compound (1) is obtained.

The sulfonyl imide compound (1) may contain a production solvent used in production of the sulfonyl imide compound (1) (a remaining solvent contained in the sulfonyl imide compound (1) obtained by the known method described above) within a range where the object of the present invention is not impaired. The remaining solvent refers to a solvent used in a reaction for production of the sulfonyl imide compound (1), a solvent used in purification, or the like. Examples thereof include water; alcohol solvents such as methanol, ethanol, propanol, and butanol; carboxylic acid solvents such as formic acid and acetic acid; ketone-based solvents such as acetone, methyl ethyl ketone, methyl isobutyl ketone, and diisobutyl ketone; nitrile solvents such as isobutyronitrile, acetonitrile, valeronitrile, and benzonitrile; ester solvents such as ethyl acetate, isopropyl acetate, and butyl acetate; aliphatic ether solvents such as diethyl ether, diisopropyl ether, t-butyl methyl ether, and cyclopentyl methyl ether; halogen-based solvents such as HF; nitro group-containing solvents such as nitromethane and nitrobenzene; nitrogen-containing organic solvents such as ethyl formamide and N-methylpyrrolidone; dimethyl sulfoxide; a glyme solvent; aromatic hydrocarbon solvents such as toluene, o-xylene, m-xylene, p-xylene, benzene, ethylbenzene, isopropylbenzene, 1,2,3-trimethylbenzene, 1,2,4-trimethylbenzene, 1,3,5-trimethylbenzene, tetralin, cymene, methylethylbenzene, 2-ethyltoluene, chlorobenzene, and dichlorobenzene; chain aliphatic hydrocarbon solvents such as pentane, hexane, heptane, octane, decane, dodecane, undecane, tridecane, decalin, 2,2,4,6,6-pentamethylheptane, isoparaffin (for example, "MARUKASOLR" (a mixture of 2,2,4,6,6-pentamethylheptane and 2,2,4,6,6-pentamethylheptane, manufactured by Maruzen Petrochemical Co., Ltd.), "ISOPAR (registered trademark) G" (mixed C9-C11 isoparaffin manufactured by Exxon Mobil Corporation), "ISOPAR (registered trademark) E" (mixed C8-C10 isoparaffin manufactured by Exxon Mobil Corporation), dichloromethane, chloroform, and 1,2-dichloroethane; cyclic aliphatic hydrocarbon solvents such as cyclohexane, methylcyclohexane, 1,2-dimethylcyclohexane, 1,3-dimethylcyclohexane, 1,4-dimethylcyclohexane, ethylcyclohexane, 1,2,4-trimethylcyclohexane, 1,3,5-trimethylcyclohexane, propyl cyclohexane, butyl cyclohexane, and "SWACLEAN 150" (a mixture of C9 alkylcyclohexane manufactured by Maruzen Petrochemical Co., Ltd.); aromatic ether solvents such as anisole, 2-methylanisole, 3-methylanisole, and 4-methylanisole; carbonate solvents such as ethylene carbonate, propylene carbonate, butylene carbonate, dimethyl carbonate, ethylmethyl carbonate, and diethyl carbonate; chain ether solvents such as dimethoxymethane and 1,2-dimethoxyethane; cyclic ether solvents such as tetrahydrofuran, 2-methyltetrahydrofuran, 1,3-dioxane, and 4-methyl-1,3-dioxolane; cyclic ester solvents such as γ-butyrolactone and γ-valerolactone; sulfolane solvents such as sulfolane and 3-methylsulfolane; N,N-dimethylformamide; dimethyl sulfoxide; and N-methyloxazolidinone.

It is only required that the electrolyte salt contains the sulfonyl imide compound (1), but may also contain another electrolyte (an electrolyte other than the sulfonyl imide compound (1)). Examples of the other electrolyte include an imide salt and a non-imide salt.

Examples of the imide salt include another fluorine-containing sulfonyl imide salt (hereinafter referred to as "other sulfonyl imide compound") that is different from the sulfonyl imide compound (1). Examples of the other sulfonyl imide compound include a non-lithium salt of fluorine-containing sulfonyl imide listed above as the sulfonyl imide compound (1) (e.g., a salt obtained by substituting lithium (ion) in the sulfonyl imide compound (1) with a cation other than the lithium ion). Examples of the salt substituted with a cation other than the lithium ion include: an alkali metal salt such as a sodium salt, a potassium salt, a rubidium salt, and a cesium salt; an alkali earth metal salt such as a beryllium salt, a magnesium salt, a calcium salt, a strontium salt, and a barium salt; an aluminum salt; an ammonium salt; and a phosphonium salt. The other sulfonyl imide compounds may be used alone or in combination of two or more. Alternatively, as the other sulfonyl imide compound, a commercially available product may be used, or one obtained by synthesis using a known method may also be used.

Examples of the non-imide salt include a salt of a non-imide-based anion and a cation (lithium ions and the cations shown above as examples). Examples of the non-imide salt include: a compound represented by the general formula (2):
[Chemical 2]

LiPFₐ(CₘF₂ₘ₊₁)₆₋ₐ (2)

(where 0 ≤ a ≤ 6 and 1 ≤ m ≤4) (hereinafter referred to as a "fluorophosphoric acid compound (2)"); a compound represented by the general formula (3):
[Chemical 3]

LiBF_{b}(CₙF₂ₙ₊₁)_{4-b} (3)

(where 0 ≤ b ≤ 4 and 1 ≤ n ≤4) (hereinafter referred to as a "fluoroboric acid compound (3)"); lithium salts such as lithium hexafluoroarsenate (LiAsF₆), LiSbF₆, LiClO₄, LiSCN, LiAlF₄, CF₃SO₃Li, LiC[(CF₃SO₂)₃], LiN(NO₂), and LiN[(CN)₂]; and non-lithium salts (e.g., salts obtained by substituting lithium (ion) with the cation shown above as examples in these lithium salts, such as NaBF₄, NaPF₆, and NaPF₃(CF₃)₃). These non-imide salts may be used alone or in combination of two or more. Alternatively, as the non-imide salt, a commercially available product may be used, or one obtained by synthesis using a known method may also be used.

### <Electrolyte Compact Production Method>

In an electrolyte compact production method according to the embodiment, an electrolyte in a powder form is a starting material. In other words, the starting material is a powder (solid) of the electrolyte containing the sulfonyl imide compound (1), and may be a powder of an electrolyte containing only the sulfonyl imide compound (1) (i.e., a powder of the sulfonyl imide compound (1)).

### <Granular Electrolyte Compact Production Method>

The electrolyte compact production method according to the embodiment (hereinafter also referred to as a "granular electrolyte compact production method") has features in terms of including compressing and pulverizing.

### (Compressing)

The compressing is a process of compression-granulating the electrolyte in a powder form. In a method for compression-granulating the electrolyte in a powder form, for example, the electrolyte in a powder form is passed between press rollers in pair by extrusion, to achieve compaction (compression-granulating). As can be seen from above, in the compressing, compression-granulating is adopted, not extrusion-granulating in which the electrolyte may be excessively heated. In this compressing, performed is not production of a particulate substance by extrusion-granulating the electrolyte in a powder form, but production of a sheet-shaped or strip-shaped electrolyte by compression-granulating of the electrolyte in a powder form. Since the sheet-shaped or strip-shaped electrolyte is obtained by one operation of the compressing, application of excessive heat to the electrolyte is suppressed.

In the compressing, a roller compactor (compression granulator) can be suitably used. The roller compactor is not particularly limited, and a commonly used, commercially available product can be used.

In the compressing, a pressure (roll pressure) at which the electrolyte in a powder form is compression-granulated may be appropriately adjusted according to the type (salt composition) of the electrolyte, the amount of the remaining solvent, the hardness and size of the compact, and the like, and is not particularly limited. The pressure is preferably 3 MPa or more, more preferably 5 MPa or more, yet more preferably 10 MPa or more. In view of suppressing the application of excessive heat to the electrolyte, the upper limit thereof is preferably 50 MPa or less, more preferably 40 MPa or less, yet more preferably 30 MPa or less.

The temperature at which the compressing is carried out is not particularly limited, and is, for example, room temperature (about 25°C).

When the roller compactor is used in the compressing, the gap between the rollers is not particularly limited, and is preferably 0.1 mm or more, more preferably 0.3 mm or more. The upper limit thereof is preferably 10 mm or less, more preferably 0.7 mm or less.

The sheet-shaped or strip-shaped electrolyte is obtained by the compressing. The size of the sheet-shaped or strip-shaped electrolyte is not particularly limited, and the length in the longitudinal direction is preferably from 10 mm to 100 mm inclusive, more preferably from 10 mm to 80 mm inclusive, yet more preferably from 10 mm to 70 mm inclusive, still more preferably from 10 mm to 60 mm inclusive. The length in a short-length direction is preferably from 5 mm to 50 mm inclusive, more preferably from 5 mm to 30 mm inclusive, yet more preferably from 5 mm to 20 mm inclusive. The thickness is preferably from 0.1 mm to 5 mm inclusive, more preferably from 0.1 mm to 3 mm inclusive.

### (Pulverizing)

The pulverizing is a process of pulverizing the sheet-shaped or strip-shaped electrolyte obtained in the compressing. By the pulverizing, a granular electrolyte compact is obtained.

In the pulverizing, a vibration mill, a roll granulator, a knuckle-type pulverizer, a roll mill, a high-speed rotary pulverizer (a pin mill, a hammer mill, or a screw mill), a cylindrical mixer, or the like can be used. Among them, a roll granulator is preferable, and a roll granulator with a screen is more preferable, in view of controlling the particle diameter of the electrolyte compact. The roll granulator is not particularly limited, and a commonly used, commercially available product can be used.

The temperature at which the pulverizing is carried out is not particularly limited, and is, for example, room temperature (about 25°C).

When the roll granulator or the roll granulator with a screen is used in the pulverizing, the groove pitch thereof is not particularly limited, and is preferably from 1 mm to 25 mm inclusive, more preferably from 1 mm to 10 mm inclusive, yet more preferably from 5 mm to 8 mm inclusive. When the roll granulator with a screen is used, the mesh size of the screen thereof is not particularly limited, and is preferably from 1 mm to 25 mm inclusive, more preferably from 1 mm to 10 mm inclusive, yet more preferably from 5 mm to 8 mm inclusive.

### (Other Processes)

The granular electrolyte compact production method may further include classifying, if necessary. The classifying is a process of screening for the granular electrolyte compact and the electrolyte in a powder form that cannot form a compact. An operation of the classifying is not particularly limited, and examples thereof include screening with a sieve.

According to the granular electrolyte compact production method including the compressing and the pulverizing described above, and if necessary, the other process, the particle diameter of the granular electrolyte compact obtained is preferably 2 mm or more, more preferably 5 mm or more, yet more preferably more than 5 mm. The upper limit thereof is preferably 10 mm or less, more preferably 8 mm or less. The particle diameter can be measured, for example, with a vernier caliper, or the like.

The granular electrolyte compact may contain the electrolyte in a powder form. The average particle diameter of the electrolyte in a powder form is not particularly limited. In view of classifying the electrolyte in a powder form from the granular electrolyte compact, for example, the electrolyte in a powder form is a fine powder having an average particle diameter of 1,300 µm (1.3 mm) or less, preferably 1,000 µm (1 mm) or less, more preferably 700 µm or less. The average particle diameter herein means a cumulative 50% mass average particle diameter in accordance with JIS Z 8801-1. The cumulative 50% mass average particle diameter can be determined, for example, by a method described in Examples described below.

### <Effects>

According to the granular electrolyte compact production method of the present disclosure, the following effects can be obtained.
· The electrolyte in a powder form containing the sulfonyl imide compound is molded in the shape of the granular electrolyte by the compressing and the pulverizing. Since in the compressing, the electrolyte in a powder form is compression-granulated, the application of excessive heat to the obtained sheet-shaped or strip-shaped electrolyte is suppressed, and the electrolyte is unlikely to be affected. The granular electrolyte compact is obtained by the compressing and the pulverizing without adding a component such as a binder to the electrolyte. Therefore, the electrolyte is unlikely to be affected also in this point.
· The granular electrolyte compact with a predetermined particle diameter (e.g., from 2 mm to 10 mm inclusive) obtained by pulverization of the sheet-shaped or strip-shaped electrolyte in the pulverizing is unlikely to be scattered, and is easily handled (handleability is improved).
· The granular electrolyte compact has a decreased specific surface area, and production of an aggregate (blocking) during storage or transportation is suppressed. Therefore, the granular electrolyte compact can be easily extracted from a container (a time is hardly required to extract the granular electrolyte compact from the container).

As described above, in the case of the electrolyte containing the sulfonyl imide compound, the granular compact that is unlikely to affect the electrolyte, is easily handled, and can be easily extracted from a container can be produced.

### <Tablet-Shaped Electrolyte Compact Production Method>

As a method that is different from the granular electrolyte compact production method described above, the electrolyte compact production method according to the embodiment (may also be hereinafter referred to as a "tablet-shaped electrolyte compact production method") has features in terms of including tableting.

### (Tableting)

The tableting is a process of tableting the electrolyte in a powder form. The tableting herein refers to pressing the electrolyte in a powder form to allow the electrolyte to be retained in a predetermined shape (for example, a tablet shape). Specifically, the tableting is a process of compression-molding the electrolyte in a powder form with upper and lower dies. In the tableting, compression-molding is adopted, not extrusion-granulating (extrusion-molding) in which the electrolyte may be excessively heated. In the tableting, performed is not production of a particulate substance by extrusion-granulating the electrolyte in a powder form, but production of a tablet-shaped electrolyte compact by compression-molding of the electrolyte in a powder form. Since the tablet-shaped electrolyte compact is obtained only by the tableting, application of excessive heat to the electrolyte is suppressed.

In the tableting, a tablet press, suitably a rotary tablet press, or the like can be used. The rotary tablet press is not particularly limited, and a commonly used, commercially available product can be used.

In the tableting, a pressure (tableting pressure) at which the electrolyte in a powder form is compression-molded may be appropriately adjusted according to the type (salt composition) of the electrolyte, the amount of the remaining solvent, the hardness and size of the compact, and the like. The pressure is not particularly limited as long as it is equal to or higher than a minimum pressure necessary to maintain the form of the tablet, and is preferably 3 kN or more, more preferably 5 kN or more, yet more preferably 10 kN or more. In view of suppressing the application of excessive heat to the electrolyte, the upper limit thereof is preferably 150 kN or less, more preferably 100 kN or less, yet more preferably 50 kN or less.

The temperature at which the tableting is carried out is not particularly limited, and is, for example, room temperature (about 25°C).

When the tablet press or the rotary tablet press is used in the tableting, the diameter of a punch tip thereof is not particularly limited, and is preferably from 1 mm to 25 mm inclusive, more preferably from 5 mm to 15 mm inclusive, yet more preferably from 5 mm to 10 mm inclusive.

### (Other Processes)

The tablet-shaped electrolyte compact production method may further include at least one of classifying, drying, or wetting, if necessary.

The classifying is a process of screening for the tablet-shaped electrolyte compact and the electrolyte in a powder form that cannot form a compact. An operation of the classifying is not particularly limited, and examples thereof include screening with a sieve.

The drying is a process of drying the tablet-shaped electrolyte compact. The method for the drying is not particularly limited, and examples thereof include a method in which the remaining solvent in the tablet-shaped electrolyte compact is heated to a temperature at which the solvent can be volatilized. The drying may be carried out under reduced pressure, under an atmosphere of inert gas such as nitrogen, or under inert gas flow.

The wetting is a process of wetting the electrolyte in a powder form using a solvent or the like, or wetting the tablet-shaped electrolyte compact using a solvent or the like. That is, the wetting may be a process carried out before the tableting, or a process carried out after the tableting. A method for the wetting is not particularly limited, and examples thereof include a method in which the solvent or the like is added to the electrolyte in a powder form or the tablet-shaped electrolyte compact.

According to the tablet-shaped electrolyte compact production method including the tableting, and if necessary, the other process, the particle diameter of the tablet-shaped electrolyte compact obtained is preferably 5 mm or more, more preferably more than 5 mm. The upper limit thereof is preferably 25 mm or less, more preferably 15 mm or less, yet more preferably 10 mm or less. The particle diameter can be measured, for example, with a vernier caliper, or the like.

The tablet-shaped electrolyte compact may contain the electrolyte in a powder form. The average particle diameter of the electrolyte in a powder form is not particularly limited. In view of distinguishing the electrolyte in a powder form from the tablet-shaped electrolyte compact, for example, the electrolyte in a powder form is a fine powder having an average particle diameter of 1,300 µm (1.3 mm) or less, preferably 1,000 µm (1 mm) or less, more preferably 700 µm or less. The average particle diameter herein means a cumulative 50% mass average particle diameter in accordance with JIS Z 8801-1. The cumulative 50% mass average particle diameter can be determined, for example, by a method described in Examples described below.

In view of improving handleability, the content (ratio) of the electrolyte in a powder form (fine powder having an average particle diameter equal to or less than the upper limit value) relative to 100 parts by mass (100% by mass) of the tablet-shaped electrolyte compact is 10 parts by mass (10% by mass) or less, preferably 5 parts by mass (5% by mass) or less. That is, the amount of fine powder in the tablet-shaped electrolyte compact is small.

The hardness (particle hardness) of the tablet-shaped electrolyte compact is from 10 N to 50 N inclusive. When the hardness of the electrolyte compact is equal to or more than the lower limit value described above, the shape can be retained during transportation (handleability is improved) as compared with a case of extrusion-granulating (extrusion-molding). When the hardness is equal to or less than the upper limit value, a treatment speed for dissolving the electrolyte compact in an electrolytic solution is increased. Therefore, a disadvantage such as deterioration in economy is suppressed. In view of the fact described above, the lower limit value of the hardness is preferably 20 N or more, and the upper limit value thereof is preferably 40 N or less, more preferably 30 N or less.

The increase rate of a stainless (SUS) component (containing Fe, Ni, Cr, and the like, the same applies hereinafter) contained in the tablet-shaped electrolyte compact (the tablet after molding) relative to the SUS component contained in the electrolyte in a powder form (the powder before molding) is preferably 10% by mass or less, more preferably 5% by mass or less, yet more preferably 1% by mass or less, most preferably equal to or less than the measurement lower limit value (N.D., about 0% by mass). The amount of the SUS component contained in the tablet-shaped electrolyte compact is preferably 5 ppm by mass or less. Even though the granular electrolyte compact production method and the tablet-shaped electrolyte compact production method are based on molding by a metal (mainly stainless (SUS)) device, it can reduce contamination of the electrolyte compact with the SUS component (Fe, Ni, Cr, and the like) (increase of the SUS component in the electrolyte compact) to a minimum. In particular, the tablet-shaped electrolyte compact production method including the tableting, in which the electrolyte is passed through the metal device only once, is considered to further reduce the contamination of the electrolyte compact with the SUS component (increase of the SUS component in the electrolyte compact), as compared with the granular electrolyte compact production method including the compressing and the pulverizing, in which the electrolyte is passed through the metal device a plurality of times, in terms of the number of times the electrolyte passes through the metal device during production processes.

### <Effects>

According to the tablet-shaped electrolyte compact production method of the present disclosure, the following effects can be obtained.
· By the tableting, the electrolyte in a powder form containing the sulfonyl imide compound is molded into the tablet-shaped electrolyte. Since in the tableting, the electrolyte in a powder form is compression-molded, application of excessive heat to the obtained tablet-shaped electrolyte compact is suppressed, and the electrolyte is unlikely to be affected. The tablet-shaped electrolyte compact is obtained by the tableting without adding a component such as a binder to the electrolyte. Therefore, the electrolyte is unlikely to be affected also in this point.
· The tablet-shaped electrolyte compact with a predetermined particle diameter (e.g., from 5 mm to 25 mm inclusive) is unlikely to be scattered, and is easily handled (handleability is improved).
· The tablet-shaped electrolyte compact has a decreased specific surface area, and production of an aggregate (blocking) during storage or transportation is suppressed. Therefore, the tablet-shaped electrolyte compact can be easily extracted from a container (a time is hardly required to extract the granular electrolyte compact from the container).

As described above, in the case of the electrolyte containing the sulfonyl imide compound, the tablet-shaped compact that is unlikely to affect the electrolyte, is easily handled, and can be easily extracted from a container can be produced.

According to the (tablet-shaped) electrolyte compact of the present disclosure, the following effects can be obtained.
· Since the hardness of the tablet-shaped electrolyte compact is within the predetermined range, the tablet-shaped electrolyte compact is excellent in solubility in an electrolyte solution, and the production of the electrolytic solution is facilitated.
· Since the tablet-shaped electrolyte compact is a compact having a particle size distribution in which the amount of fine powder is small, handling during production of the electrolytic solution is easy.
· The tablet-shaped electrolyte compact is difficult to cause a disadvantage such as clogging during extraction from the container.
· Since the tablet-shaped electrolyte compact has no history of heating in each process, the production amount of ion component is small, and performance during use in a battery is high (a reduction in performance is suppressed).
· The tablet-shaped electrolyte compact suppresses the contamination with the SUS component (increase of the SUS component) caused by the device.

### <Applications>

The electrolyte compact obtained by the production method of the present disclosure is used, for example, in a battery (a battery having a charge-discharge mechanism), an electric storage (electrochemical) device (or a material for an ion conductor constituting the battery and device), or the like. Specifically, the electrolyte compact can be used as an electrolytic solution constituting, for example, a primary battery, a secondary battery (e.g., a lithium (ion) secondary battery), a fuel battery, an electrolytic capacitor, an electric double layer capacitor, a solar battery, an electrochromic display device, and the like.

### EXAMPLES

The present disclosure will be described below by way of examples. The present disclosure is not limited to the following examples. The following examples can be modified and changed based on the spirit of the present disclosure, and are not excluded from the scope of the present disclosure.

### <Example 1 Series>

### (Example 1)

10 kg of LiFSI powder (manufactured by NIPPON SHOKUBAI CO., LTD., average particle diameter: 5 µm to 500 µm, mode diameter: 263 µm, the same applies hereinafter) was put into a roller compactor (manufactured by Kurimoto, Ltd., model: MRCP-200), compression-molded at a gap between rollers of 0.5 mm under a pressure of 20 MPa. Thus, a strip-shaped substance (strip-shaped electrolyte) with a length in the longitudinal direction of 50 mm and a powdery substance were obtained. Subsequently, the strip-shaped substance and the powdery substance were pulverized with a granulator with a screen having a mesh size of the screen of 6 mm (manufactured by Kurimoto, Ltd., model: RGS-1512), and classified with a sieve having an opening of 1 mm. Thus, a mixture of 3 kg of granular substance (granular electrolyte compact) having a particle diameter of 6 mm and 7 kg of powdery substance (powdery electrolyte, average particle diameter: 2 µm to 1,300 µm, mode diameter: 272 µm) were obtained. The obtained mixture of the granular substance and the powdery substance was filled into a 1-L container, and then stored at room temperature (about 25°C) for 1 month in the state. When the content (mixture) was extracted from the container after the storage, the content was extracted from an outlet (outlet diameter: 45 mm) without an aggregate.

### (Example 2)

10 kg of LiFSI powder was put from a hopper into a rotary tablet press provided with a punch and a die having a diameter of 5 mm (manufactured by KIKUSUI SEISAKUSHO LTD., model: VIRG 0518SR3AZ, the same applies hereinafter), and successively tableted (tableting pressure: 10 kN) for 2 hours. Thus, a mixture of 9.7 kg of tablet-shaped substance (tablet-shaped electrolyte compact) having a particle diameter of 5 mm and 0.3 kg of powdery substance (powdery electrolyte, average particle diameter: 0.5 µm to 600 µm, mode diameter: 280 µm) was obtained. The obtained mixture of the tablet-shaped substance and the powdery substance was filled into a 1-L container, and then stored at room temperature (about 25°C) for 1 month in the state. When the content (mixture) was extracted from the container after the storage, the content was extracted from an outlet (outlet diameter: 45 mm) without an aggregate.

### (Example 3)

10 kg of LiFSI powder was put from a hopper into a rotary tablet press provided with a punch and a die having a diameter of 6 mm, and successively tableted (tableting pressure: 10 kN) for 2 hours. Thus, a mixture of 9.8 kg of tablet-shaped substance (tablet-shaped electrolyte compact) having a particle diameter of 6 mm and 0.2 kg of powdery substance (powdery electrolyte, average particle diameter: 0.5 µm to 650 µm, mode diameter: 262 µm) was obtained. The obtained mixture of the tablet-shaped substance and the powdery substance was filled into a 1-L container, and then stored at room temperature (about 25°C) for 1 month in the state. When the content (mixture) was extracted from the container after the storage, the content was extracted from an outlet (outlet diameter: 45 mm) without an aggregate.

### (Comparative Example 1)

A LiFSI powder was filled into a 1-L container, and stored at room temperature (about 25°C) for 1 month in the state. When the content (the LiFSI powder) was extracted from the container after the storage, an aggregate having a size larger than the outlet (outlet diameter: 45 mm) was found, and the content was not extract without pulverizing.

In Example 1 including the compressing and the pulverizing, and Examples 2 and 3 including the tableting, it was found that the content (electrolyte compact) was extracted from the container after one-month storage without pulverizing as compared with Comparative Example 1 including no these processes. This shows that the electrolyte compacts obtained in Examples 1, 2, and 3 can be easily extracted from the container.

### <Example 2 Series>

### (Example 4)

A mixture of 9.7 kg of tablet-shaped substance (tablet-shaped electrolyte compact) having a particle diameter of 5 mm and 0.3 kg of powdery substance (powdery electrolyte (fine powder), average particle diameter: 0.5 µm to 600 µm, mode diameter: 280 µm) was obtained in the same manner as in Example 2 using 10 kg of LiFSI powder. For the obtained compact, physical properties such as the particle size distribution (powdery substance/compact), the ratio of the powdery substance (fine powder ratio) relative to 100 parts by mass of the compact, the hardness, the dissolution rate, the ion component amount, and the SUS component amount were measured by the following methods. Table 1 shows the results.

### [Measurement of Particle Diameter of Electrolyte Compact]

A vernier caliper was used for actual measurement, and the shortest length was regarded as the particle diameter.

### [Measurement of Average Particle Diameter of Powdery Electrolyte]

50 g of the powdery electrolyte was put into a sieve based on JIS Z 8801-1 Standard, and the sieve was covered with a top lid and a bottom lid, and then shaken vertically 300 times. The particle size distribution was determined, and the cumulative 50% mass average particle diameter was calculated.

### [Measurement of Hardness]

The compact (five samples) obtained in Example 4 was set on a digital hardness tester (KHT-20N, manufactured by FUJIWARA SCIENTIFIC CO., LTD.), and the hardness was measured. The average hardness obtained by averaging the measurement results of the five samples was used as the hardness of the compact.

### [Measurement of Dissolution Rate]

Into a 50-mL screw tube including a stirrer chip, 11 g of the compact of LiFSI obtained in Example 4 and 29 g of dimethyl carbonate were put, and then stirred with a magnetic stirrer. From the start of stirring, the compact was visually observed, and the time required to completely dissolve the compact was measured.

### [Measurement of Ion Component Amount]

In a 20-mL vial made of polypropylene (PP), 0.1 g of the compact of LiFSI obtained in Example 4 was weighted and diluted 100-fold with deionized water, to obtain a measurement solution. The ion component amounts (concentrations) of fluoride ions (F⁻), sulfamate ions, chloride ions (Cl⁻), and sulfate ions (SO₄²⁻) were measured by ion chromatography. The measurement conditions are as follows.
· Device: DIONEX INTEGRION HPIC manufactured by Thermo Fisher Scientific
· Eluent: 7 mmol/L to 18 mmol/L KOH
· Column: Dionex IonPac AS 17-C 4 mm I.D. × 250 mm

### [Measurement of SUS Component Amount]

In a 20-mL vial made of PP, 0.5 g of the compact of LiFSI obtained in Example 4 was weighted and diluted with about 9.5 g of 4% nitric acid, to obtain a measurement solution. A metal (SUS) component such as Cr, Fe, and Ni contained in the measurement solution was analyzed by high-frequency inductively coupled plasma atomic emission spectroscopy (ICP-AES). As a device, ICPE-9000 (manufactured by Shimadzu Corporation) was used.

### (Comparative Example 2)

10 kg of LiFSI powder was molten at 145°C. The obtained LiFSI in a molten state at a temperature from 140°C to 145°C was sucked by a dropper, rapidly added dropwise on a SUS304 plate heated at 60°C, and then solidified. Thus, 10 kg of pellet (electrolyte compact) having a particle diameter of 4.8 mm was obtained (the pellet contained no powdery substance (fine powder)). The above-described reaction and operation were carried out in a dry room in which a dew point was -50°C or lower. Physical properties of the obtained pellet were measured in the same manner as in Example 4. Table 1 shows the results.

### (Comparative Example 3)

Physical properties were measured in the same manner as in Example 4 using LiFSI powder (100% fine powder). Table 1 shows the results.

**[Table 1]**

| | | Example 4 | Comparative Example 2 | Comparative Example 3 |
|---|---|---|---|---|
| Molding method (Condition) | | Tableting | Melting-solidification (Temperature: 145°C) | Not molding |
| | | (Tableting pressure: 10 kN) | | |
| | | (Temperature: 25°C) | | |
| Electrolyte shape | | Tablet shape | Pellet shape Particle diameter: 4.8 mm | Powder (fine powder) |
| | | Particle diameter: 5 mm | | Average particle diameter: 0.5 µm to 600 µm |
| | | Uniform shape | | |
| Particle size distribution (Fine powder ratio) | | 0.3 kg/9.7 kg (3%) | No fine powder (0%) | Only fine powder (100%) |
| Hardness | | 24 N | 52 N | - |
| Dissolution rate | | 18.2 minutes | 21.5 minutes | 2.6 minutes |
| Ion component | F⁻ | 72.7 | 104.5 | 63.8 |
| | sulfamate ion | N.D. | 132.3 | N.D. |
| | Cl⁻ | N.D. | 2.4 | N.D. |
| | SO₄²⁻ | N.D. | 45.7 | N.D. |
| SUS component | Cr amount before and after molding (increase rate) | N.D.→N.D. (0%) | N.D.→N.D. (0%) | Without metal device |
| | Fe amount before and after molding (increase rate) | N.D.→N.D. (0%) | | |
| | | | | (0%) |
| | Ni amount before and after molding (increase rate) | 0.17 ppm→0.17 ppm (0%) | | |

## Claims

1. A method for producing a compact of an electrolyte containing a sulfonyl imide compound represented by the general formula (1), the method comprising:
compressing of performing compression-granulating of the electrolyte in a powder form to obtain a sheet-shaped or strip-shaped electrolyte; and
pulverizing the sheet-shaped or strip-shaped electrolyte to obtain a granular electrolyte compact,
LiN(R¹SO₂)(R²SO₂) (wherein R¹ and R² are identical or different from each other and each represent a fluorine atom, an alkyl group with 1 to 6 carbon atoms, or a fluoroalkyl group with 1 to 6 carbon atoms) (1).

2. The method of claim 1, wherein
in the compressing, the electrolyte in a powder form is compression-granulated by passing the electrolyte between press rollers in pair to obtain the sheet-shaped or strip-shaped electrolyte having a length in a longitudinal direction of from 10 mm to 100 mm inclusive.

3. The method of claim 1 or 2, wherein
in the compressing, a roller compactor is used.

4. The method of any one of claims 1 to 3, wherein
in the pulverizing, a roll granulator is used.

5. The method of any one of claims 1 to 4, wherein
the granular electrolyte compact has a particle diameter of from 1 mm to 10 mm inclusive.

6. A method for producing a compact of an electrolyte containing a sulfonyl imide compound represented by the general formula (1), the method comprising:
tableting the electrolyte in a powder form to obtain a tablet-shaped electrolyte compact,
LiN(R¹SO₂)(R²SO₂) (wherein R¹ and R² are identical or different from each other and each represent a fluorine atom, an alkyl group with 1 to 6 carbon atoms, or a fluoroalkyl group with 1 to 6 carbon atoms) (1).

7. The method of claim 6, further comprising:
drying the tablet-shaped electrolyte compact.

8. The method of claim 6, further comprising:
wetting the electrolyte in a powder form or the tablet-shaped electrolyte compact.

9. The method of any one of claims 6 to 8, wherein
in the tableting, a rotary tablet press is used.

10. The method of any one of claims 6 to 9, wherein
the tablet-shaped electrolyte compact has a particle diameter of from 5 mm to 25 mm inclusive.

11. The method of any one of claims 1 to 10, wherein
the sulfonyl imide compound represented by the general formula (1) contains at least one of LiN(FSO₂)₂ or LiN(CF₃SO₂)₂.

12. The method of any one of claims 1 to 11, wherein
the electrolyte further contains at least one selected from the group consisting of a compound represented by the general formula (2), a compound represented by the general formula (3), and LiAsF₆,
LiPFₐ(CₘF₂ₘ₊₁)₆₋ₐ (2)
(where 0 ≤ a ≤ 6 and 1 ≤ m ≤ 4),
LiBF_{b}(CₙF₂ₙ₊₁)_{4-b} (3)
(where 0 ≤ b ≤ 4 and 1 ≤ n ≤ 4).

13. A compact of an electrolyte containing a sulfonyl imide compound represented by the general formula (1),
a proportion of the electrolyte in a powder form having an average particle diameter of 1300 µm being 10 parts by mass or less relative to 100 parts by mass of the compact,
the compact having a hardness of from 10 N to 50 N inclusive,
LiN(R¹SO₂)(R²SO₂) (wherein R¹ and R² are identical or different from each other and each represent a fluorine atom, an alkyl group with 1 to 6 carbon atoms, or a fluoroalkyl group with 1 to 6 carbon atoms) (1).

14. The compact of claim 13, wherein
the compact has a particle diameter of from 5 mm to 25 mm inclusive.
